# EUROPEAN PATENT APPLICATION

(11) **EP 1 164 736 A1**
(43) Date of publication of application: **19.12.2001**
(21) Application number: 01902655.8
(22) Date of filing: 25.01.2001
(51) Int. Cl.: H04J 13/04

(54) **RECEIVER AND METHOD FOR INFERRING RECEPTION TIME**

(30) Priority: 25.01.2000 JP 2000016161
(71) Applicant: MATSUSHITA ELECTRIC INDUSTRIAL CO., LTD., Kadoma-shi, Osaka 571-8501 (JP)
(72) Inventor: KANEMOTO, Hideki, Yokosuka-shi, Kanagawa 239-0847 (JP); MIYOSHI, Kenichi, Yokohama-shi, Kanagawa 232-0066 (JP); MIYA, Kazuyuki, Kawasaki-shi, Kanagawa 215-0021 (JP)
(74) Representative: Grünecker, Kinkeldey, Stockmair & Schwanhäusser Anwaltssozietät
(86) International application number: JP0100467
(87) International publication number: WO0156210

(57) **Abstract**

An adder 201-1 adds a signal selected by means of a switch 101, being a signal in which pilot symbol and demodulated data symbol replica signals have been eliminated from a received signal, and a pilot symbol replica signal output from a replica signal buffer 112. A matched filter 202-1 detects the correlation between the output signal from the adder 201-1 and the spreading code assigned to user 1. A delay profile creator 203-1 creates a delay profile at the point at which a timing signal is input, and makes a threshold value decision for the correlation value, thereby estimating the reception timing of each path. By this means, it is possible to estimate reception timings with high precision and achieve improved reception quality.

## Description

### Technical Field

The present invention relates to a receiving apparatus and reception timing estimation method for use in a base station apparatus of a CDMA mobile communication system or the like.

### Background Art

In a mobile communication system, a signal transmitted by radio is received at a receiving apparatus as signals on a plurality of paths for which reception timings differ due to being reflected by reflective bodies on the radio propagation path.

The CDMA method, which is one kind of mutiple-access method, is characterized by being able to estimate the reception timing of each path based on a delay profile, separate the signals received via the various paths, and perform RAKE combination. For this reason, the CDMA method is attracting attention due to its ability to perform high-quality reception even in a multipath environment, and to increase channel capacity.

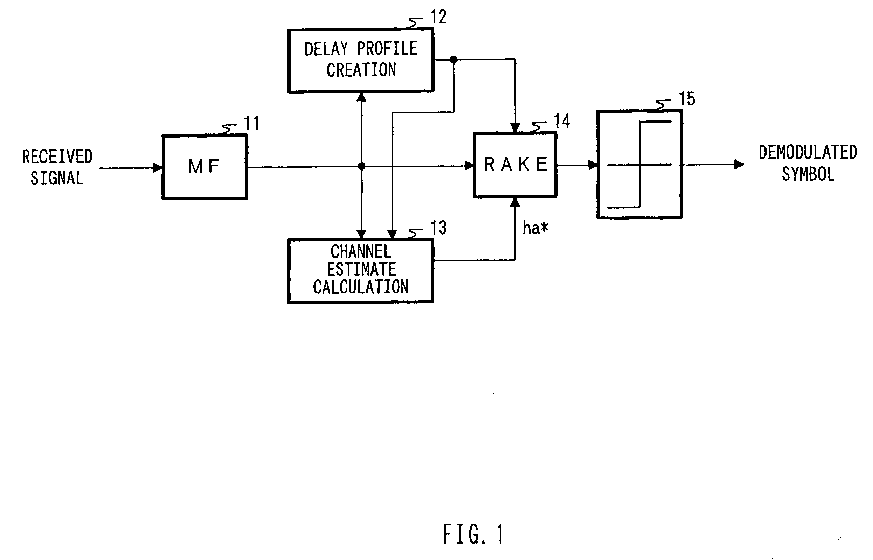

The configuration of a conventional CDMA receiving apparatus will be described below using the block diagram shown in FIG.1.

A matched filter 11 detects the correlation between an input signal and a user-specific spreading code. The correlation value detected by the matched filter 11 is input to a delay profile creator 12, a channel estimate calculator 13, and a RAKE combiner 14.

The delay profile creator 12 estimates the reception timing for each path by threshold value determination with respect to the correlation value, and outputs a signal indicating the reception timing of each path to the channel estimate calculator 13 and RAKE combiner 14.

The channel estimate calculator 13 calculates a channel estimate ha for each path, and outputs a channel estimate conjugate complex number ha* to the RAKE combiner 14.

The RAKE combiner 14 multiplies the correlation value by the channel estimate conjugate complex number ha* to compensate for channel fluctuations, and performs RAKE combination in symbol units based on the reception timing of each path, thereby improving quality. The RAKE combiner 14 then outputs symbols after RAKE combination to a discrimination circuit 15.

The discrimination circuit 15 makes a hard decision with respect to each despread signal, and outputs demodulated symbols.

In this way, a conventional receiving apparatus outputs demodulated symbols by estimating the reception timing of each path based on a delay profile, separating signals received via various paths, performing RAKE combination, and making a hard decision.

With the CDMA method a plurality of user signals are transmitted in the same frequency band, and therefore if the spreading codes of the user signals are not mutually orthogonal, it is not possible to completely separate each user signal from the other user signals. Moreover, even if the spreading codes of the user signals are mutually orthogonal, interference will occur if the time correlation is not 0.

However, as an above-described conventional receiving apparatus uses received signals from which interference has not been eliminated at all, problems are that the precision of reception timing detection is poor, and there is a fixed limit on improvement of reception quality.

### Disclosure of Invention

It is an objective of the present invention to provide a receiving apparatus and reception timing estimation method that enable reception timings to be estimated with high precision, and reception quality to be improved, by updating a delay profile.

This objective is achieved by updating and creating a delay profile by using signals in which replica signals of demodulated data symbols have been eliminated from received signals and known symbol replica signals have been added.

### Brief Description of Drawings

FIG.1 is a block diagram showing the configuration of a conventional receiving apparatus;
FIG.2 is a block diagram showing the configuration of a receiving apparatus according to Embodiment 1 of the present invention;
FIG.3 is a block diagram showing the internal configuration of the despreading section of a receiving apparatus according to Embodiment 1 of the present invention;
FIG.4 is a block diagram showing the configuration of a receiving apparatus according to Embodiment 2 of the present invention;
FIG.5 is a block diagram showing the configuration of a receiving apparatus according to Embodiment 3 of the present invention; and
FIG.6 is a block diagram showing the internal configuration of the despreading section of a receiving apparatus according to Embodiment 3 of the present invention.

### Best Mode for Carrying out the Invention

With reference now to the attached drawings, embodiments of the present invention will be explained in detail below.

### (Embodiment 1)

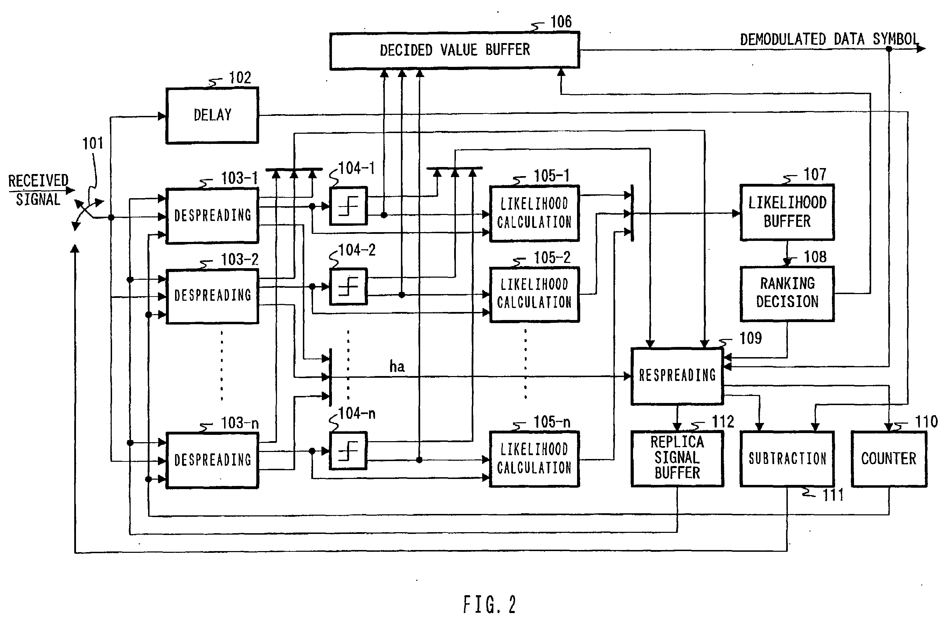

FIG.2 is a block diagram showing the configuration of a receiving apparatus according to Embodiment 1 of the present invention.

A switch 101 selects a received signal or a signal output from a subtracter 111 as an input signal, and outputs it to a delayer 102 and despreading sections 103-1 to n.

The delayer 102 removes the pilot symbol part from the signal selected by the switch 101, delays it by a predetermined time, and outputs it to the subtracter 111.

Each despreading section 103-1 to n adds the signal selected by the switch 101 and a replica signal of the pilot symbol output from a replica signal buffer 112 and performs despreading processing. Details of the internal configuration of the despreading sections 103-1 to n will be given later.

Each of discrimination circuits 104-1 to n makes a hard decision for each despread symbol. Then, discrimination circuits 104-1 to n output a pilot symbol following hard decision to a respreader 109, and output a data symbol after hard decision to corresponding likelihood calculators 105-1 to n and a decided value buffer 106.

Likelihood calculators 105-1 to n calculate the likelihood of the data symbols output from the corresponding despreading sections 103-1 to n and the data symbols output from the corresponding discrimination circuits 104-1 to n-that is, the data symbols before and after hard decision-for all data symbols present in a unit period (for example, a one-slot period), and output a signal indicating the likelihood to a likelihood buffer 107.

The decided value buffer 106 stores data symbols after hard decisions, and, based on a signal output by a ranking decision unit 108, outputs the data symbol after hard decision with the highest likelihood as a demodulated data symbol, and also outputs it to the respreader 109.

Based on the likelihoods stored in the information usage section 107, the ranking decision unit 108 attaches a rank to all undemodulated data symbols (hereinafter, processing for attaching a rank to all undemodulated symbols is referred to as "ranking processing"), and outputs a signal indicating the data symbol with the highest likelihood to the decided value buffer 106 and respreader 109.

The respreader 109 performs respreading by multiplying a pilot symbol after a hard decision by the channel estimate ha, and outputs a pilot symbol after respreading to the replica signal buffer 112. In addition, the respreader 109 recognizes a demodulated data symbol output from the decided value buffer 106 based on a signal output from the ranking decision unit 108, performs respreading by multiplying the demodulated data symbol by the channel estimate ha, and outputs a data symbol after respreading to a counter 110 and the subtracter 111.

The counter 110 counts the number of data symbols respread by the respreader 109-that is, the number of demodulated data symbols-and when the count reaches a preset threshold value, outputs a signal indicating the processing start timing to despreading sections 103-1 to n. For example, if the threshold value is 3, the counter 110 outputs a timing signal at the point at which three data symbols have been demodulated.

The subtracter 111 subtracts the respread data symbols from the received signal output from the delayer 102, and outputs the signal after subtraction processing to the switch 101.

The replica signal buffer 112 temporarily stores the respread pilot symbols, and outputs them to despreading sections 103-1 to n.

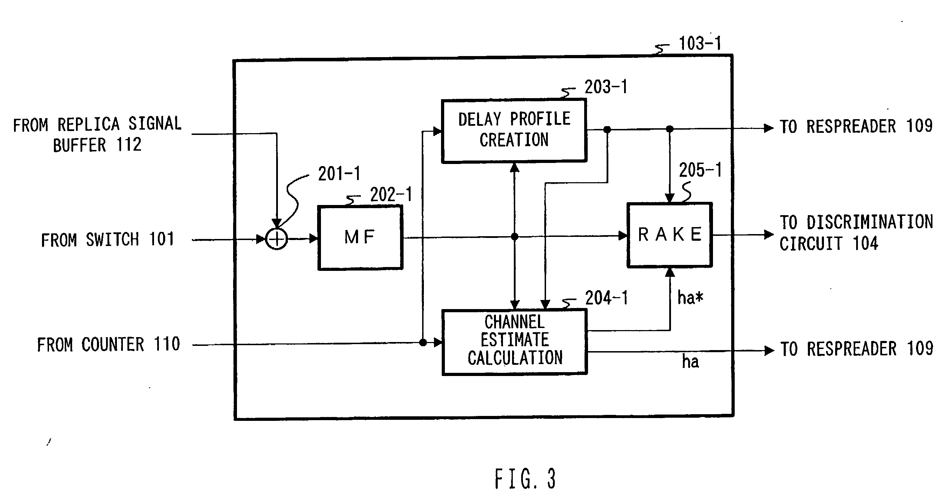

Next, the internal configuration of despreading sections 103-1 to n will be described using the block diagram shown in FIG.3. As despreading sections 103-1 to n all have the same configuration, only the configuration of despreading section 103-1 for user 1 will be described here.

Adder 201-1 adds the signal selected by the switch 101 and the replica signal of the pilot symbol output from the replica signal buffer 112.

Matched filter 202-1 detects the correlation between the output signal from adder 201-1 and the spreading code assigned to user 1. The correlation value detected by matched filter 202-1 is input to delay profile creator 203-1, channel estimate calculator 204-1, and RAKE combiner 205-1.

When a timing signal output from the counter 110 is input, delay profile creator 203-1 updates the delay profile, estimates the reception timing for each path by determining a threshold value with respect to the correlation value, and outputs a signal indicating the reception timing of each path to RAKE combiner 205-1 and respreader 109-1. For example, if the threshold value is 3, delay profile creator 203-1 inputs a timing signal at the point at which three data symbols have been demodulated, creates a delay profile and estimates the reception timing. By controlling the timing of delay profile updating, it is possible to achieve a balance between the precision of reception timing estimation and the amount of computation.

When a timing signal output from the counter 110 is input, channel estimate calculator 204-1 calculates channel estimate ha for each pass, outputs channel estimate conjugate complex number ha* to RAKE combiner 205-1, and outputs channel estimate ha to the respreader 109. For example, if the threshold value is 3, channel estimate calculator 204-1 inputs a timing signal at the point at which three data symbols have been demodulated, and calculates the channel estimate. By controlling the timing of channel estimate updating, it is possible to achieve a balance between channel estimate precision and the amount of computation.

RAKE combiner 205-1 multiplies the correlation value by channel estimate conjugate complex number ha* to compensate for channel fluctuations, and performs RAKE combination in symbol units based on the reception timing of each path, thereby improving quality. RAKE combiner 205-1 then outputs symbols after RAKE combination to discrimination circuit 104-1 and likelihood calculator 105-1.

When the reception timing of each path is newly detected by delay profile creator 203-1, and channel estimates are newly calculated by channel estimate calculator 204-1, RAKE combiner 205-1 performs processing using the updated path reception timings and channel estimates.

It is also possible for the timing for estimating reception timings by delay profile creation by delay profile creator 203-1 and the timing for channel estimate calculate by channel estimate calculator 204-1 to be made different.

Next, the flow of pilot symbol processing in the above-described receiving apparatus will be described.

Pilot symbols that have undergone RAKE combination by RAKE combiners 205-1 to n are output to discrimination circuits 104-1 to n and likelihood calculators 105-1 to n respectively.

Pilot symbols that have undergone RAKE combination undergo hard decision by discrimination circuits 104-1 to n and are output to the respreader 109.

Pilot symbols that have undergone hard decision are respread by means of multiplying spreading codes in the same way as on the transmitting side by the respreader 109, and pilot symbol replica signals are generated and output to the replica signal buffer 112.

After being stored temporarily in the replica signal buffer 112, pilot symbol replica signals are output to despreading sections 103-1 to n, and in despreading sections 103-1 to n, they are added to a signal with demodulated data symbols removed from the received signal, and correlation value detection, channel estimate calculation, and RAKE combination are performed.

The above-described series of processing steps for pilot symbols are then repeated until all the data symbols have been demodulated.

Next, the flow of data symbol processing in the above-described receiving apparatus will be described.

Data symbols that have undergone RAKE combination by RAKE combiners 205-1 to n are output to discrimination circuits 104-1 to n and likelihood calculators 105-1 to n respectively.

Data symbols that have undergone RAKE combination undergo hard decision by discrimination circuits 104-1 to and are output to likelihood calculators 105-1 to n.

After hard decision, data symbols are output respectively to likelihood calculators 105-1 to n and to the decided value buffer 106. Post-hard-decision data symbols are stored temporarily in the decided value buffer 106.

Meanwhile pre-hard-decision symbols output from RAKE combiners 205-1 to n and post-hard-decision symbols output from discrimination circuits 104-1 to n are input to likelihood calculators 105-1 to n, and the likelihood of each symbol is calculated by likelihood calculators 105-1 to n. The likelihoods are stored temporarily in the likelihood buffer 107.

Then, ranking processing is performed by the ranking decision unit 108 based on the likelihoods stored in the likelihood buffer 107, and a signal indicating the data symbol with the highest likelihood is output to the decided value buffer 106 and respreader 109.

With the decided value buffer 106, the post-hard-decision data symbol with the highest likelihood is output to another apparatus not shown in the drawing as a demodulated data symbol, as well as being output to the respreader 109.

Demodulated data symbols are respread by means of a spreading code in the same way as on the transmitting side by the respreader 109, and a demodulated data symbol replica signal is generated and output to the subtracter 111.

In the subtracter 111, the demodulated data symbol replica signal is subtracted from the signal output from the delayer 102, is output to the delayer 102 and despreading sections 103-1 to n, and in despreading sections 103-1 to n is added to a pilot symbol replica signal, and then correlation value detection, channel estimate detection, and RAKE combination are performed.

The above-described series of processing steps are then repeated until all the data symbols have been demodulated.

By thus removing the pilot symbol and demodulated data symbol replica signal from a received signal, and using a signal to which a pilot symbol replica signal has been added, it is possible to update and create a delay profile, and to estimate reception timings with high precision, and achieve an improvement in reception quality sequentially.

### (Embodiment 2)

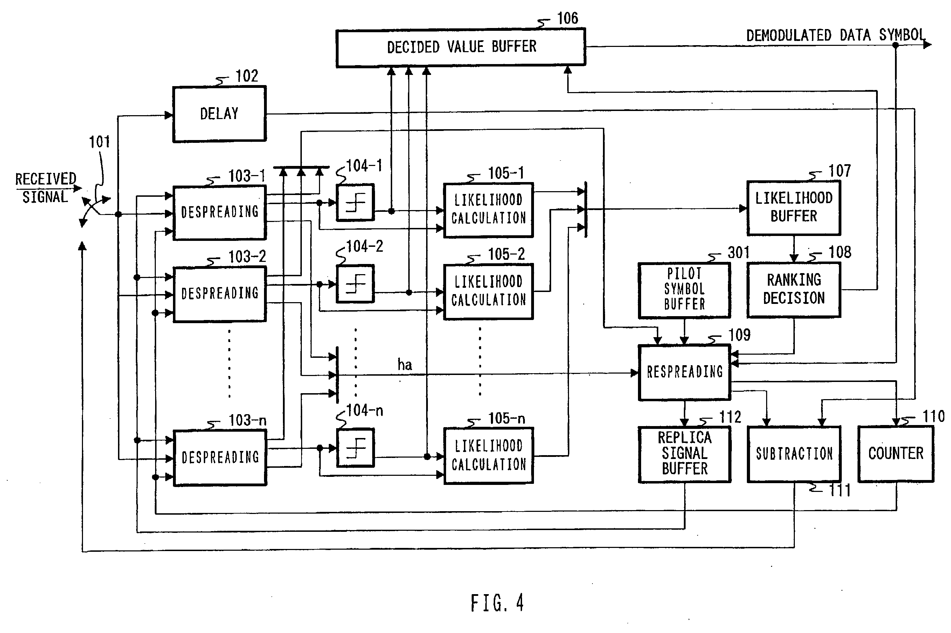

FIG.4 is a block diagram showing the configuration of a receiving apparatus according to Embodiment 2. Parts of the receiving apparatus shown in FIG.4 identical to those in the receiving apparatus shown in FIG.2 are assigned the same reference numerals as in FIG.2 and their detailed explanations are omitted.

Compared with the receiving apparatus shown in FIG.2, the configuration of the receiving apparatus in FIG.4 has the addition of a pilot symbol buffer 301.

The pilot symbol buffer 301 stores pilot symbols.

Discrimination circuits 104-1 to n make a hard decision for each despread symbol. Then post-hard-decision data symbols are output to the corresponding likelihood calculators 105-1 to n and the decided value buffer 106.

The respreader 109 multiplies pilot symbols stored in the pilot symbol buffer 301 by channel estimate ha to perform respreading, and outputs pilot symbols after respreading to the replica signal buffer 112. Also, the respreader 109 recognizes a demodulated data symbol output from the decided value buffer 106 based on a signal output from the ranking decision unit 108, multiplies a demodulated data symbol by channel estimate ha to perform respreading, and outputs symbols after respreading to the counter 110 and subtracter 111.

Thus, since pilot symbols are already known, by providing a buffer that stores pilot symbols, and respreading stored pilot symbols and generating pilot symbol replica signals, reception timings can be estimated with greater precision than in the case where pilot symbol replica signals are generated using provisionally decided values for pilot symbols as described in Embodiment 1 above.

### (Embodiment 3)

As spreading and despreading are linear computations, adding a spreading replica signal of a respread pilot symbol to an input signal to perform despreading as shown in Embodiment 2 above is equivalent to adding a symbol replica signal of a pilot symbol before respreading to a despread input signal.

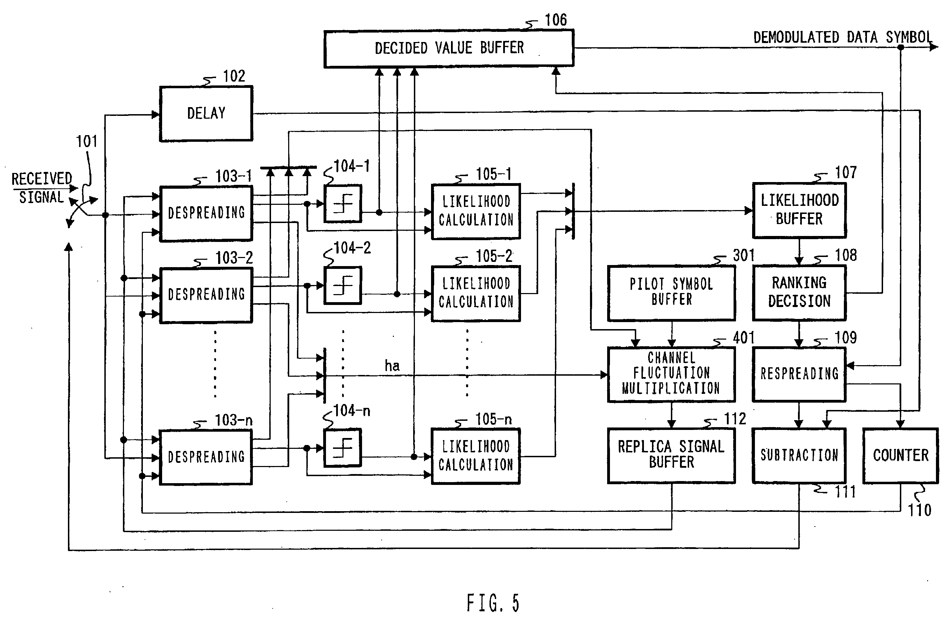

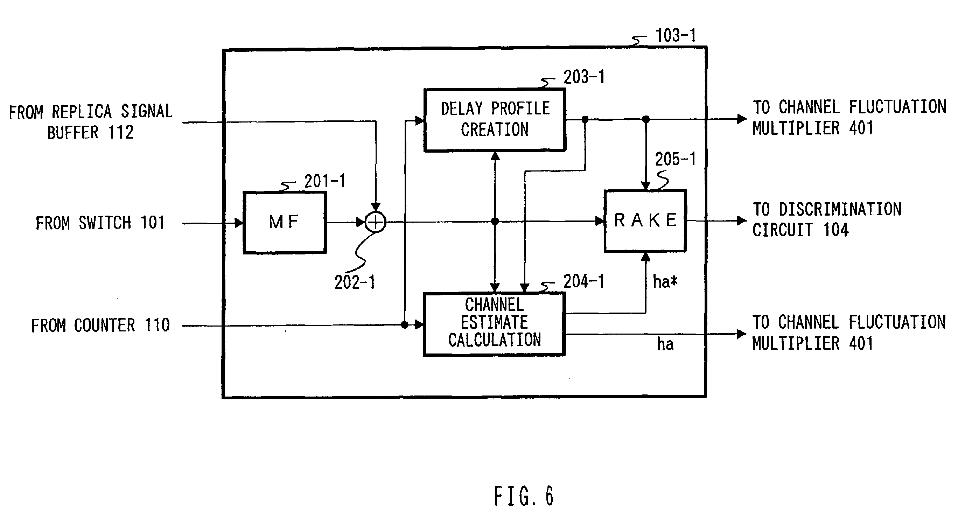

FIG.5 is a block diagram showing the configuration of a receiving apparatus according to Embodiment 3, and FIG.6 is a block diagram showing the configuration of the despreading section of a receiving apparatus according to Embodiment 3. Parts of the receiving apparatus shown in FIG.5 identical to those in the receiving apparatus shown in FIG.4 are assigned the same reference numerals as in FIG.4 and their detailed explanations are omitted. Also, parts of the despreading section shown in FIG.6 identical to those in the despreading section shown in FIG.3 are assigned the same reference numerals as in FIG.3 and their detailed explanations are omitted.

Compared with the receiving apparatus shown in FIG.4, the configuration of the receiving apparatus in FIG.5 has the addition of a channel fluctuation multiplier 401. Also, compared with the despreading section shown in FIG.3, the configuration of the despreading section in FIG.6 uses a different positional relationship between matched filter 102-1 and adder 101-1.

The channel fluctuation multiplier 401 of the receiving apparatus shown in FIG.5 delays pilot symbols stored in the pilot symbol buffer 301, and also multiplies them by channel estimate ha to generate symbol replica signals of pilot symbols, and stores these in a replica signal buffer 113. That is to say, the replica signal buffer 113 stores symbol replica signals of pilot symbols before spreading.

Matched filter 202-1 of the despreading section shown in FIG.6 detects the correlation between the signal selected by means of the switch 101 and the spreading code assigned to user 1, and outputs the correlation value to adder 201-1.

Adder 201-1 adds the output signal from matched filter 202-1 and the symbol replica signal of a pilot symbol stored in the replica signal buffer 112. The result of addition by adder 201-1 in the present embodiment is equal to the correlation value output from matched filter 202-1 in above-described Embodiment 1.

By thus despreading an input signal and adding the symbol replica signal of a pilot symbol before respreading, pilot symbol respreading need only be carried out one initial time, enabling the amount of computation to be reduced.

Also, as a result of providing a buffer function for storing channel estimates in the channel fluctuation multiplier 401, generating symbol replica signals of pilot symbols using appropriate timing, and outputting them to adders 101-1 to n, it is longer necessary to store pilot symbol spreading replica signals, making it possible to reduce the size of the replica signal buffer 112 and so enabling the apparatus configuration to be simplified.

In the above-described embodiments, a case is described where likelihoods are calculated and ranking processing and elimination are performed based on the likelihoods, but the present invention is not limited to this, and can also be applied to a case where all data symbols for which the likelihood exceeds a predetermined threshold value are demodulated and eliminated.

Moreover, in the above-described embodiments, a case is described where only the symbol with the highest likelihood is demodulated in one ranking processing operation, but the present invention is not limited to this, and can also be applied to a case where a plurality of data symbols are demodulated in one ranking processing operation.

Furthermore, in the above-described embodiments, a case is described where symbol replica signals are created and eliminated, but the present invention is not limited to this, and can also be applied to a case where an interference signal elimination apparatus is used.

As can be seen from the above descriptions, according to a receiving apparatus and reception timing estimation method of the present invention, it is possible to update a delay profile and estimate reception timings with high precision, and to improve reception quality.

This application is based on the Japanese Patent Application No.2000-016161 filed on January 25, 2000, entire content of which is expressly incorporated by reference herein.

### Industrial Applicability

The present invention is suitable for use in a base station apparatus of a CDMA mobile communication system.

## Claims

1. A receiving apparatus comprising:
correlation value detecting means for detecting a correlation value between a signal in which a replica signal of a received symbol has been eliminated from a received signal and a spreading code;
delay profile creating means for creating a delay profile based on a correlation value output from this correlation value detecting means; and
reception timing estimating means for estimating the reception timing of each path based on the created delay profile.

2. The receiving apparatus according to claim 1, further comprising counting means for counting the number of eliminated symbols, wherein delay profile creating means updates a delay profile at a point in time when the count value of said counting means exceeds a predetermined threshold value.

3. The receiving apparatus according to claim 1, further comprising channel estimate calculating means for calculating a channel estimate for each path using a known symbol based on a delay profile.

4. The receiving apparatus according to claim 3, further comprising counting means for counting the number of eliminated symbols, wherein channel estimate calculating means calculates a channel estimate at a point in time when the count value of said counting means exceeds a predetermined threshold value.

5. The receiving apparatus according to claim 1, further comprising replica signal generating means for spreading known symbols and demodulated symbols and generating a replica signal, wherein correlation value detecting means detects a correlation value between a signal in which a replica signal of an already generated known signal has been added to a signal in which known symbol and demodulated symbol replica signals have been eliminated from a received signal and a spreading code.

6. The receiving apparatus according to claim 5, further comprising combining means for compensating for and combining correlation value channel fluctuations of each path based on a delay profile and channel estimate, wherein replica signal generating means delays a demodulated symbol of an output signal of said combining means based on said delay profile, multiplies it by said channel estimate, and performs spreading, thereby generating a replica signal of the demodulated symbol.

7. The receiving apparatus according to claim 5, wherein replica signal generating means, based on a delay profile, delays a pre-stored known symbol, multiplies it by a channel estimate, and performs spreading, thereby generating a replica signal of the known symbol.

8. The receiving apparatus according to claim 1, further comprising replica signal generating means for generating known symbol and demodulated symbol replica signals, wherein correlation value detecting means adds a previously generated known symbol replica signal to the correlation value between a signal in which a replica signal of a demodulated symbol has been eliminated from a received signal and a spreading code.

9. The receiving apparatus according to claim 8, further comprising combining means for compensating for and combining correlation value channel fluctuations of each path based on a delay profile and channel estimate, wherein replica signal generating means delays a demodulated symbol of an output signal of said combining means based on said delay profile and multiplies it by said channel estimate, thereby generating a replica signal of the demodulated symbol.

10. The receiving apparatus according to claim 8, wherein replica signal generating means, based on a delay profile, delays a pre-stored known symbol and multiplies it by a channel estimate, thereby generating a replica signal of the known symbol.

11. A base station apparatus provided with a receiving apparatus, said receiving apparatus comprising:
correlation value detecting means for detecting a correlation value between a signal in which a replica signal of a received symbol has been eliminated from a received signal and a spreading code;
delay profile creating means for creating a delay profile based on a correlation value output from this correlation value detecting means; and
reception timing estimating means for estimating the reception timing of each path based on the created delay profile.

12. A base station apparatus provided with a receiving apparatus, said receiving apparatus comprising:
correlation value detecting means for detecting a correlation value between a signal in which a replica signal of a received symbol has been eliminated from a received signal and a spreading code;
delay profile creating means for creating a delay profile based on a correlation value output from this correlation value detecting means; and
reception timing estimating means for estimating the reception timing of each path based on the created delay profile.

13. A reception timing estimating method comprising the steps of:
detecting a correlation value between a signal in which a replica signal of a received symbol has been eliminated from a received signal and a spreading code;
creating a delay profile based on the detected correlation value; and
estimating the reception timing of each path based on the created delay profile.
